# EUROPÄISCHE PATENTSCHRIFT

(11) **EP 0 898 534 B1**
(45) Veröffentlichungstag und Bekanntmachung des Hinweises auf die Patenterteilung: **15.09.1999**
(21) Anmeldenummer: 97922867.3
(22) Anmeldetag: 24.04.1997
(51) Int. Cl.: B61D 17/04, B62D 33/04, B62D 31/02

(54) **VERBINDUNG ZWISCHEN ZWEI BAUTEILEN UND MODULARES BAUTEIL**
SYSTEM FOR CONNECTING TWO COMPONENTS AND MODULAR COMPONENT
SYSTEME DE RACCORDEMENT ENTRE DEUX ELEMENTS CONSTITUTIFS ET ELEMENT CONSTITUTIF MODULAIRE

(30) Priorität: 15.05.1996 DE 19619617
(43) Veröffentlichungstag der Anmeldung: 03.03.1999
(73) Patentinhaber: Talbot GmbH & Co. KG, 52070 Aachen (DE)
(72) Erfinder: ALTENBURG, Klaus, D-52146 Würselen (DE); ZIMMERMANN, Michael, D-52066 Aachen (DE); DEDERICHS, August, D-52072 Aachen (DE)
(86) Internationale Anmeldenummer: DE9700842
(87) Internationale Veröffentlichungsnummer: WO9743157

(56) Entgegenhaltungen:
- DE-B- 1 108 576
- DE-U- 29 519 372

## Beschreibung

Die Erfindung bezieht sich auf eine Verbindung zwischen zwei Bauteilen, insbesondere zum Bau von Großkarosserien sowie auf mit solchen Verbindungen versehene Bauteile.
Aus DE-U-295 19 372 ist eine Baugruppe mit stranggepreßten Hohlprofilen für Wagenaufbauten bekannt, deren randseitig stumpf miteinander zu verbindende Profilbauteile mittels in der Trennfuge liegender Schrauben und durch die Schrauben kraftschlüssig paarweise miteinander verbundener Nutensteine bzw. Längsschienen kalt mit Formschluß quer zur Trennfuge zusammengefügt werden.

Die Nutensteine bzw. Längsschienen sind jeweils mit zwischen die Profilbauteile in die Trennfuge einzufügenden Fortsätzen versehen, welche die Profilbauteile im verklammerten Zustand auf einem definierten Abstand voneinander halten. Daher beruht der Zusammenhalt der Bauteile nur auf dem Formschluß der Hinterschneidungen zwischen Nutensteinen bzw. Längsschienen und den Anschlußprofilen; die ausgeübten Spannkräfte werden ausschließlich auf den besagten Fortsätzen abgesetzt. Zwar kann man gemäß diesem Stand der Technik anscheinend ein Flächenelement nach Lösen der Schrauben und Entfernen der Nutensteine bzw. Längsschienen ohne Demontage auch der angrenzenden Elemente herausziehen, jedoch sind über den Reibschluß hinaus keine Mittel zur Längsstabilisierung der Trennfuge gegen Schubkräfte offenbart.

Die nachveröffentlichte DE-A-195 38 793 beschreibt eine Verbindung, bei der sich ausgehend von zwei aneinanderzusetzenden flächigen Modulelementen über die Trennfuge jeweils paarig antiparallel erste Verbindungselemente erstrecken, die beim Zusammenfügen der Modulelemente in korrespondierende Bohrungen im jeweils gegenüber liegenden Modulelement eintauchen. Sie schaffen damit eine momentensteife Verbindung quer zur Trennfuge. In axialer Richtung werden sie paarweise durch je ein zweites Verbindungselement verriegelt, das quer zur Längserstreckung der ersten Verbindungselemente in an diesen ausgebildete, in Flucht liegende Augen einsteckbar und darin axial verspannbar ist. Die zweiten Verbindungselemente lassen sich nach dem Zusammenfügen zweier Modulelemente alle aus derselben Richtung einstecken. Im Karosseriebau von Reisezugwagen wird das von der Außenseite des Wagenkastens her geschehen.

Diese Verbindungstechnik ist gleichermaßen auf Modulelemente in Differential- wie Integral-Bauweise anwendbar. Sie eignet sich ferner zum Verbinden der Modulelemente mit einer metallischen Untergestellstruktur. Auch Zwischenbodenelemente von Doppelstock-Fahrzeugkästen, die einen H-Querschnitt mit Boden- und Seitenwandteilen haben, können seitenwandseitig mit gleichen randseitigen Verbindungen in die modulare Gesamtstruktur integriert werden.

Aus DE-A-44 30 829 ist eine selbstspannende Schraubverbindung zwischen Profilteilen bekannt, deren paarig aneinanderzusetzende Ränder antiparallele Zentriernocken nebst korrespondierenden Ausnehmungen als Formschlußelemente umfassen, die durch die sich quer über die Trennfuge hinweg erstreckenden Schrauben gegeneinander verspannbar sind. Damit wird zwar eine formschlüssige Schubsicherung in der Trennfuge erreicht. Die Schrauben sind jedoch nur bedingt zugänglich, und es ist wegen der feststehenden Formschlußelemente nicht möglich, ein einzelnes Element ohne Demontage auch der angrenzenden Teile herauszunehmen.

Der Erfindung liegt die Aufgabe zugrunde, eine demontierbare Verbindung der eingangs erörterten Art mit einem in der Trennfugen-Ebene angeordneten axial spannbaren Verbindungselement so auszubilden, daß die Bauteile in der Trennfuge ohne radiale Belastung des Verbindungselements schubfest aufeinander spannbar sind, und fuhr diese Verbindung besonders geeignete Bauteile zu schaffen.

Diese Aufgabe wird erfindungsgemäß mit den Merkmalen des Patentanspruchs 1 gelost. Die Merkmale der nachgeordneten Unteransprüche geben vorteilhalte Weiterbildungen dieser Gegenstände an.

Im Vergleich mit dem eingangs genannten Stand der Technik wird mit diesen Merkmalen eine schnellmontagefähige und ebenso einfach demontierbare Verbindung geschaffen, deren wirksame Spannkräfte besser definiert und damit berechnet werden können, und die darüber hinaus durch Verwendung von zerstörungstrei entfernbaren Formschlußelementen auch längs der Trennfuge gegen Schubkräfte widerstandsfähig ist.

Jedes axial spannbare Verbindungselement korrespondiert demnach mit Spannstücken, die sich beidseits der flächigen Ausdehnung der zu verbindenden Bauteile über die Trennfuge hinweg erstrecken und ihrerseits auf divergierende Keilflächen aufpreßbar sind. Bevorzugt umschließen sie dabei die Außenränder der Durchführung des Verbindungselements vollständig, so daß sie selbst als Formschlußelemente der Schubversteifung wirksam sind.

Durch die bevorzugte Verwendung von Schließringbolzen oder ggf. auch Blindnieten als axial spannbare Verbindungselemente bringt man auf die Spannstücke im Vergleich mit dem Stand der Technik viel genauer definierte, von Reibungskräften unbeeinflußte axiale Vorspannkräfte auf. Das bringt Vorteile bei der Dimensionierung der Verbindungselemente. Gleichwohl sind auch Schrauben als axial spannbare Verbindungselemente denkbar.

Der Spannvorgang des bevorzugten Verbindungselements erzeugt in der Trennfuge eine sehr hohe definierte Anpreßkraft, die zur Übertragung der im Betrieb zu erwartenden Kräfte und Momente vollständig ausreicht. Das mit radialem Spiel in seiner tunnelartigen Durchführung liegende Verbindungselement selbst bleibt in radialer Richtung beanspruchungsfrei.

Die Durchführungen der Verbindungselemente sind jeweils aus zwei Halbschalen zusammengesetzt, die beidseits der Trennfuge in den Rändem der Bauteile bzw. der betreffenden separaten Anschlußteile gebildet sind. Die Halbschalen sind in separaten Anschlußstücken, z. B. Spantfüße, eingeformt, während bei z. B. aus Strangpreßprofilen gefertigten Integralbauteilen an deren Rändern bzw. Randprofilen selbst die benötigten Halbschalen und benachbarten Keilflächen vorgesehen sind.

Somit können alle Verbindungselemente schon vor dem Zusammenfügen der zu verbindenden Bauteile in eine der Halbschalen eingelegt und nötigenfalls vorläufig fixiert werden. Es ist nicht notwendig, sie durch eine geschlossene Bohrung einzufadeln. Daraus ergibt sich als wesentlicher Vorteil bei der Herstellung dieser Kaltfügeverbindungen, daß die Spannstücke schon vorab auf die Verbindungselemente aufgefädelt werden können und diese somit für die Montage fertig konfektioniert angeliefert werden können. Daraus ergibt sich eine erhebliche Beschleunigung der Montage und auch eine hohe Qualität weil Verwechslungen nicht vorkommen können.

Bevorzugt sind in der Trennfuge im Bereich der Durchführung der Verbindungselemente zusätzliche Formschlußelemente vorgesehen, die das richtige Positionieren der Bauteile im Bereich der Trennfuge unterstützen. Sie sind im Kraftfluß der Trennfuge zumindest auf Schub belastbar und setzen so z. B. auch Verwindungen einer Großkarosserie um ihre Längsachse einen hohen Widerstand längs der Trennfugen entgegen.

In einer besonders vorteilhaften Ausführungsform sind die Formschlußelemente lose oder lösbar in weitere in der Trennfuge verlaufende, aus zwei Halbschalen gebildete Durchführungen eingelegt, in denen sie beim Spannen des Verbindungselements festgelegt werden. Es ist auch denkbar, sie bei der Herstellung der Anschlußbereiche einstückig vorzufertigen, indem sie mittels dünner Materialstege angeschlossen werden, die später als Sollbruchstellen dienen können.

Bei einer eventuellen Demontage kann man sie nach dem Lösen oder Entfernen des Verbindungselements und der Spannstücke aus den Durchführungen herausstoßen. Danach befinden sich in der Trennfuge keine Elemente mehr, die das Herausziehen eines an allen Anschlußstellen gelösten Bauteils aus der Fläche behindern würden.

Eine bevorzugte Ausführungsform dieser zusätzlichen Formschlußelemente besteht aus zylindrischen Walzen oder Zylinderstiften, die beidseits der Durchführung des eigentlichen Verbindungselements in jeweils eigene Durchführungen einlegbar sind, die ihrerseits in der Ebene der Trennfuge leicht winklig gegeneinander und gegen die (winkelhalbierende) Achse der Verbindungselement-Durchführung angestellt sind. Die Walzen haben gehärtete Oberflächen. Sie sind eindeutig definierte und berechenbare Glieder in der Kraft- und Schubübertragungskette der Trennfuge, sie positionieren und zentrieren die Bauteile zueinander, und sie tragen bei zur einfachen Demontierbarkeit einzelner Bauteile bzw. Modulelemente.

Die Spannstücke können zunächst lose auf den Schaff des Verbindungselements aufgesteckt werden, sie könnten aber auch in einer Sonderbauform zumindest einseitig direkt als Setzkopf der Blindnieten etc. angeformt sein.

Man wird sie bevorzugt als Ringe oder dicke Scheiben ausführen, die auf einer Seite im wesentlichen eben sind und auf der anderen Seite eine konkave Ausnehmung in Kegelstumpfform haben. Diese Ausnehmung wird beidseits zu den zu verbindenden Bauteilen hingewendet und korrespondiert dort mit den am Rand der Durchführung für das Verbindungselement angeformten divergierenden Keilflächen.

In der Ausführungsform mit zusätzlichen Formschlußelementen können die Spannstücke auch sattelartig mit einer im Längsschnitt trapezförmigen Ausnehmung ausgeführt werden und mit Keilflächen in Form von Leisten korrespondieren, die sich entlang den Rändern der Bauteile bzw. deren Randproflen parallel zur Trennfuge erstrecken.

Auf der im Montagezustand außenliegenden Seite der Bauteile sind die Trennfugenränder gegenüber der Hauptfläche versenkt angeordnet, damit die (Schließ-) Köpfe der Verbindungselemente nicht hervorstehen.

Dem Blick können sie durch eine flächenbündige Abdeckleiste oder dgl. entzogen werden. Diese kann bei geeigneter Ausführung ebenfalls eine Funktion im Kräfte und Momentenfluß im Trennfugenbereich wahmehmen, z. B. eine Verstärkung gegen längs der Trennfuge auftretende Schubbelastungen.

Das beschriebene modulare Verbindungsprinzip ist außer zum Aufbau von Seitenwänden mit horizontalen Trennfugen auch zum stirnseitigen Verbinden von Seitenwandabschnitten sowie der Seitenwande mit Stirnwãnden oder ganzen Fahrzeugköpfen an vertikalen Trennfugen verwendbar. An diesen Stellen kann ggf. das gesamte Bauteil nach dem Lösen der Verbindungselemente einfach abgenommen werden. Jedoch wird man dort innerhalb der Trennfuge vertikal tragfähige Formschlußelemente vorsehen müssen um die Spannkräfte der axial zusammengespannten Spannstücke zu unterstützen.

Abweichend vom Stand der Technik hat sich im Laufe der Entwicklung der Verbindung eine Differential-Bauteilkonstruktion als besonders vorteilhaft herausgestellt, die Spanten oder Säulen mit geschlossenen Querschnitten, insbesondere Vierkantrohre, umfaßt. Diese vereinen mehrere Vorteile.
- gute Anbindung von Anschlußstücken für die Verbindungselemente durch umlaufende Scheweißnähte, insbesondere Laserschweißnähte, an den Spantenden;
- optimale Querschnittsform für eine programmgesteuerte Zurichtung des Längsverlaufs der abgelängten Spantprofile durch maschinelles Rollbiegen, womit beliebig gekrümmte Außenkonturen einer Großkarosserie in kürzester Zeit flexibel herstellbar sind;
- breite Basis zum Auflegen und Kaltbefestigen (z. B. Stanznieten) einer Außenhautbeblechung und zum Anbinden von längslaufenden Beulsteifen (Pfetten);
- Gewichtsoptimierung durch Ausstechen von Löchern bzw. Herstellen von Gitterstrukturen in den quer zur Außenhaut verlaufenden Wandbereichen mittels Laserschneiden möglich;
- gezielte Querschnittsschwächung und Gewichtsreduzierung durch vollständiges Wegschneiden von Wandabschnitten in gering belasteten Bereichen möglich, bei Erhalt der endseitigen homogen geschlossenen Anschlußquerschnitte.

Weitere Vorteile des Gegenstands der Erfindung gehen aus der Zeichnung eines Ausführungsbeispiels und deren sich im folgenden anschließender eingehender Beschreibung hervor. Es zeigen
- Fig. 1: eine Ansicht des Trennfugenbereichs zweier aneinandergesetzter Bauteile in Differentialbauweise mit einem Paar von Spantprofilen und daran befestigten Spantfüßen oder Anschlußstücken,
- Fig. 2: eine Draufsicht auf den Rand eines der Bauteile im Bereich eines Anschlußstücks entlang der Linie B-B in Fig. 1,
- Fig. 3: eine Schnittansicht im Trennfugenbereich entlang der Linie A-A in Fig.1,

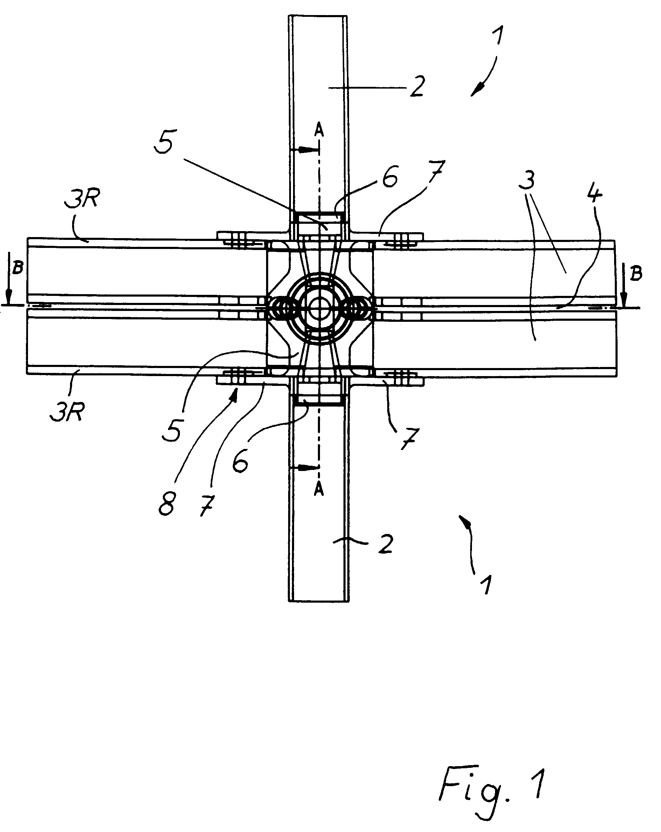

Gemäß Fig. 1 besteht jedes Bauteil 1 in Differential-Bauweise im wesentlichen aus mehreren, eine hier nicht dargestellte Außenhaut tragenden Spantprofilen 2 und längsseitigen Randprofilen 3, die entlang einer Trennfuge 4 aneinanderstoßen. Bei Bedarf enthält jedes Bauteil 1 auch noch Pfetten oder Beulsteifen, die quer zu den Spantprofilen 2 und parallel zu den Randprofilen 3 angeordnet sind und vorzugsweise mit Kaltfügeverbindungen, z. B. Stanznieten oder Druckfügen, mit den Spantprofilen 2 und der Außenhaut verbunden sind.

Der gezeigte Ausschnitt stellt eine Einzel-Spantverbindung dar, die über die Länge der Trennfuge 4 so oft wiederholt angeordnet ist, wie es den Lastannahmen entspricht.
Die Länge der Trennfuge 4 wird von der Größe der zu verbindenden Bauteile 1 bestimmt, die bei Seitenwänden von Eisenbahn-Personenwagen 20 m lang sein können.

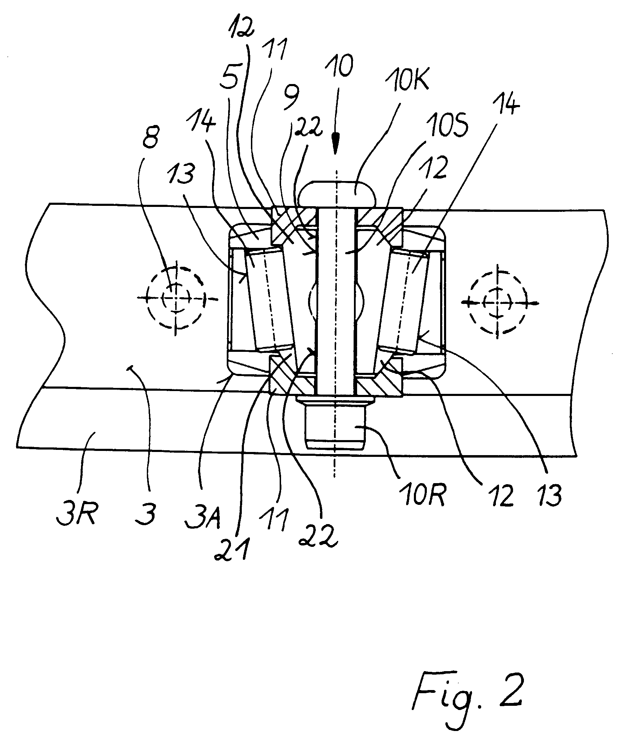

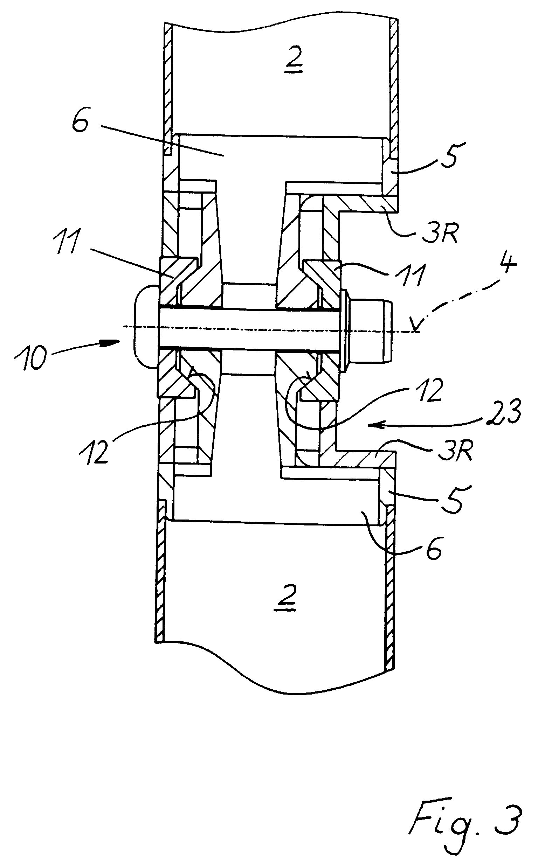

Die Spantprofile 2 haben zumindest an ihren Enden im Bereich der Trennfuge 4, die an die Randprofile 3 anstoßen, einen geschlossenen, bevorzugt vierkantigen Rohrquerschnitt. Die Randprofile 3 sind vorzugsweise als geschlossene Rechteck-Glas- oder Kohlefaser-Kastenprofile mit einer in Flucht mit einer der Wände abkragenden Rippe 3R (vgl. Fig. 2 und 3) ausgeführt. Ausgehend von dieser Grundform werden mit hochgenauen Bearbeitungsmaschinen nach dem bedartsgerechten Ablängen auf die genaue Modullänge im Bereich der Kreuzungen zwischen Spant-2 und Randprofilen 3 fortlaufend Aussparungen bzw. Durchbrüche 3A in die Randprofile 3 eingebracht.

Mit der gewählten Differentialbauweise in Kaltfügetechnik verbindet sich der Vorteil einer bedartsgerechten Werkstoffauswahl nach Festigkeits- und Leichtbaukriterien mit einer freien Kombination auch unterschiedlicher Werkstoffe und Halbzeuge an den Fügestellen.

An die Enden der Spantprolile 2 beidseits der Trennfuge 4 sind besondere Anschlußstücke oder Spantfüße 5 fest angeschlossen. Diese haben jeweils einen in Spantrichtung abragenden kurzen Bund 6, der in den geschlossenen Spantende-Rohrquerschnitt der Spantprofile 2 paßgenau einsetzbar ist. Hierauf wird er durch eine Rundum-Schweißnaht dauerhaft mit dem jeweiligen Spantprofil 2 verbunden. Es wäre in einer anderen Ausführungsform aber auch denkbar, die Spantfüße 5 mittels größerer Materialüberdeckungen wiederum mit Kaltfügeverbindungen an die Spantprofile 2 anzuschließen.

Beidseits des Stutzens 6 bzw. Spantprofils 2 ragen von den Spantfüßen 5 noch Flanschen 7 mit Bohrungen 8 senkrecht ab, mittels deren die Spantfüße 5 an die Randprofile 3 beidseits der darin eingeformten Durchbrüche 3A angeschlossen werden, bevorzugt durch Nieten.

Die fertig maßgenau abgelängten, zunächst geraden Spantprofile 2 können, soweit notwendig, mit geeigneten Biegeverfahren vorzugsweise CNC-gesteuert maschinell in die gewünschte Krümmungsform gebracht werden, die später die Außenkontur oder Hüllkurve des Fahrzeug-Wagenkastens im Querschnitt beschreibt. Hiernach werden bei Bedarf, vorzugsweise durch Laserschneiden, aus den später zur Außenhaut gewandten Spant-Partien Ausnehmungen zum Durchführen von nicht gezeigten Pfettenprofilen und dgl. herausgeschnitten. Im gleichen Arbeitsgang können dabei auch die senkrecht zur Außenhaut verlaufenden Spant-Stege zwecks Gewichtserspamis mit Ausschnitten versehen werden. Das beschriebene Biegeverfahren ist mit geschlossenen, symmetrischen Profilquerschnitten am besten verzugsfrei durchführbar, so daß ein durchgehender Vierkant-Rohrquerschnitt für die Spantprofile 2 bevorzugt wird. Dieser bietet gleichzeitig hinreichende Auflageflächen für die Anbindung der Außenhaut und ggf. der Pfetten.

Weil die Spantprofilkontur innerhalb einer Modulfamilie immer gleich bleibt, sind die Spantfüße 5 in jeweils bedarfsgerechter konstruktiver Gestaltung Standard-Massenteile, ggf. Werksnormteile, die billig in großen Stückzahlen beschafft werden können. Sie können z. B. als Feingußteile mit sehr hoher Präzision hergestellt werden.

Zum parallelen Ausrichten der Spantprofile 2 und zum Befestigen der Spantfüße 5 an den längslaufenden Randprofilen 3 genügt eine einfache Stützvorrichtung, in die zunächst das jeweilige Randprofil 3 und dann die Spantprolile 2 eingelegt werden können.

Wie man gut in Fig. 2 erkennt, werden die paarigen Spantfüße 5 gemäß Ausführungsbeispiel in der Trennfuge 4 mit einem Verbindungselement 10 und mit mehreren Formschlusselementen 14 bestückt. Diese werden sämtlich in Durchführungs-Halbschalen 21, 22 eines Spantfußes 5 eingelegt. Man blickt auf die Trennfugen-Ebene in Richtung B-B; der Spantfuß 5 ist in eine Aussparung 3A im Randprofil 3 von hinten / unten her eingesetzt und darin mittels Nieten über die erwähnten Flanschbohrungen 8 festgelegt.

Im Zentrum befindet sich eine erste Durchführung 9 für ein axial spannbares Verbindungselement 10. Als solche werden bevorzugt Schließringbolzen mit separatem, aufpreßbarem Schließring (z. B. Fabrikat HUCK®) verwendet. Sie bestehen im wesentlichen aus einem zylindrischen Schalt 10S mit einem angestauchten Kopf 10K sowie dem Schließring 1OR. Vor dem Herstellen der Verbindung hat jeder Schließringbolzen ferner einen abreißbaren Zugschaft, der hier nicht dargestellt ist. Auf den Schäft 10S sind zwei Spannstücke 11 aufgezogen. Sie sind als runde Scheiben mit einer ebenen Seite und einer kegelstumpfförmig eingesenkten Seite ausgeführt. Ihre ebenen Seiten sind zu dem Kopf 10K bzw. dem Schließring 10R hin orientiert, während die eingesenkten Seiten zueinanderweisen.

Beidseits der ersten Durchführung 9 sind um deren Ränder herum im Querschnitt keilförmige Stege 12 angeformt, deren divergierende Schrägflächen sich kegelmantelförmig um die Durchführungen 9 herum erstrecken. Damit wird auch anschaulich, daß die Spannstücke 11 auch längs der Trennfuge 4 als Formschlußelemente wirksam sind.

Dies sieht man noch besser in Fig. 3, die auch verdeutlicht, daß die Spannstücke 11 die Trennfuge 4 überbrücken. Die erste Durchführung 9 wird ersichtlich mit dem Aufeinandersetzen zweier Randprofile 3 zu einer Durchgangsbohrung komplettiert, in der das Verbindungselement 10 mit geringfügigem radialem Spiel aufgenommen ist. Man sieht hier, daß die Stege 12 dann die Ränder der Durchführung 9 ringförmig (abgesehen von einem geringfügigen freibleibenden Spalt in der Ebene B-B der Trennfuge 4) umschließen.

Beidseits der ersten Durchführung 9 ist je eine weitere aus Halbschalen in den Spantfüßen 5 gebildete Durchführung 13 in Trennfugenebene B-B vorgesehen. Gemäß Fig. 2 sind diese beiden Durchführungen 13 gegeneinander angestellt mit einem Winkel von ca. 10°. In sie werden zusätzliche Formschlußelemente 14 in Gestalt von zylindrischen Walzenkörpern eingelegt. Diese vereinfachen einerseits zentrierend das Positionieren bzw. Aneinandersetzen der Randprofile 3 bzw. der Bauteile 1, liegen andererseits aber auch im Kraftfluß in der Ebene B-B der Trennfuge 4 und können Kräfte und Momente aufnehmen und/oder übertragen.

Für die Gesamtfunktion dieser Verbindung ist es wesentlich, daß in der Trennfuge 4 ein geringer Spalt geöffnet bleibt. Damit stellt man sicher, daß die von den Spannstücken 11 aufgebrachte Spannkraft ausschließlich auf den Formschlußelementen 14 abgesetzt wird. Gleichzeitig kann man diesen Spalt während der Endmontage beobachten und daran feststellen, ob die Bauteile richtig aufeinandergesetzt wurden. Selbstverständlich wird der Spalt nach Komplettierung der Rohbaumontage abgedichtet.

In Abhängigkeit von der Länge der Trennfuge 4 sind, wie schon erwähnt, mehrere solcher Anschlußknoten gebildet, die jeweils die Enden zweier aneinanderstoßender Spantprofile 2 miteinander verbinden. Insgesamt können bei einem Wagenkasten oder Großbehälter damit umlaufende Ringspanten gebildet werden, die in vorgegebenen Abständen voneinander parallel verlaufen. Bei Personenwagen-Karosserien werden die Spantabstände wesentlich durch die Fensterteilung beeinflußt. Man kann hier in der Regel keine gleichbleibenden Abstände vorsehen, sondern wird immer zwei Spantprofile 2 an den Rändern einer Fenstersäule vorsehen, die schmaler ist als die sie einschließenden Fensterausschnitte.

Man kann in der Trennfugenebene B-B in den Bereichen zwischen den vorstehend erörterten Spantfußverbindungen noch weitere, hier nicht gezeigte Formschlußelemente anordnen, die im Kraftfluß längs der Trennfugenebene B-B Schub- und ggf. auch quer dazu gerichtete Beulkräfte aufnehmen können. In den erwähnten Personenvagen-Karosserien werden solche bevorzugt im Bereich unter- und oberhalb der Fensterausschnitte angeordnet.

Zwischen den vorstehend beschriebenen Anschlußstellen können weitere Ausschnitte in die Randpröfile 3 eingeformt werden, die im einfachsten Fall etwa halbzylindrische Umrisse haben und paarweise zusammen eine weitere Durchführung - mit freibleibendem Spalt- in der Trennfugenebene B-B umschreiben. In diese Durchführung kann man dann ein weiteres, z. B. im wesentlichen zylindrisches Formschlußelement 14 einsetzen, das an seinen Enden auf den Wandstegen der ausgeschnittenen Randprofile 3 aufliegt. Damit wird schon eine zusätzliche Schubabstützung längs der Trennfuge 4 erreicht. Das Formschlusselement 14 kann bei der Demontage einfach herausgestoßen werden.

Wenn es innerhalb des Kastenfreiraums der Randprofile 3 einen vergrößerten Durchmesser hat, könnten dessen stirnseitige Krägen die Randprofile 3 zusätzlich gegen Scherkräfte abstützen. Eine solche Form wird man jedoch nur dort einsetzen, wo bei der Demontage die damit verbundenen Bauteile nicht senkrecht zur Hauptfläche herausgezogen werden müssen.

In bekannter Weise werden nach dem Aufeinandersetzen zweier Randprofile 3, von denen eines mit den Verbindungs- und Formschlußelementen 10 bzw. 14 bestückt wurde, die noch mit dem abreißbaren Zugschalt versehenen Verbindungselemente 10 axial gespannt. Der Kopf 10K wird dabei mittels des Zugschafts maschinell gegen das ihm zugewandte Spannstück 11 gezogen. Dessen kegelstumpfförmige Ausnehmung setzt nun zentrisch auf den Stegen 12 am Rand der ersten Durchführung 9 auf. Gleichzeitig wird der Schließring 10R axial in Gegenrichtung geschoben und damit das gegenüberliegende Spannstück 11 ebenfalls auf die ihm zugeordneten Stege 12 aufgepreßt. Mit steigender Axiallast setzt eine radiale Einwärtsverformung des Schließrings 10Rein, der schließlich so stark plastisch verformt wird, daß er unlösbar auf eine Verzahnung des Schafts 10S aufgepreßt oder -geschrumpft wird. Erst nach sicherem Überschreiten der für die Schließringverformung benötigten Kraft wird der Zugschaft bündig mit der Außenkante des Schließrings 10R an einer Sollbruchstelle abgerissen.

Durch die sehr hohe axiale Vorspannung sind nun die beiden Spannstücke 11, die sich über die Trennfuge 4 hinweg erstrecken, fest auf die divergierenden Kegelmantelflächen der Stege 12 gespannt. Die beiden Anschlußstücke bzw. Spantfüße 5 werden durch die resultierende Keilwirkung mit hoher Vorspannkraft aufeinandergepreßt. Diese Kraft lagert sich allein auf den zusätzlichen Formschlußelementen 14 ab, während der Schaff 10S des Verbindungselements 10 von radialen Kräften freibleibt. Die Höhe der Spannkräfte hängt stark vom Winkel der Kegelmantelflächen bzw. der konkaven Ausnehmungen der Spannstücke 11 ab.

Um ein Versagen der Spannstücke 11 bei Krafteinwirkung auf die Trennfuge 4 (Normal-, Biege- oder Schubkräfte) weitestgehend auszuschließen, sollten die Auflageflächen zwischen dem Kopf 10K bzw. dem Schließring 1OR und dem jeweiligen Spannstück 11 möglichst groß sein.

Zur Außenverkleidung der Modulelemente bzw. Bauteile 1 werden Außenhautbleche an ihren Längsrändern mit z-förmigen Abkantungen versehen. Diese steifen einerseits die Modulelemente bzw. die Außenhaut selbst in Längsrichtung randseitig zusätzlich aus, andererseits bilden sie nach dem Zusammenfügen je zweier Bauteile 1 eine in Längsrichtung durchlaufende Rinne 23 entlang der Trennfuge 4. Die Außenhaut wird vorzugsweise mit Flachkopf-Stanznieten an den Spantprofilen 2 und Pfetten und ggf. auch innerhalb der Rinne 23 an den Randprofilen 3 befestigt. Weil sie kalt befestigt wird, kann man Sandwichbleche (zwei dünne Blechlagen mit Folienzwischenlage) verwenden, die eine hohe Eigendämpfung gegen Schall-Schwingungen haben.

Nach der Komplettierung des Modulrohbaus kann man schon mit dem weiteren Ausbau auf der Innenseite beginnen, weil der weitere Aufbau der Wagenstruktur wieder durch Kaltfügen erfolgt. Sollten besondere Schnittstellen (z. B. Leitungsdurchführungen oder dgl.) zwischen Modulelementen erforderlich sein, so können diese entweder in den Stirnbereich der Modulelemente verlegt oder über geeignete Steckverbindungen in der Trennfuge 4 realisiert werden. Bei der bevorzugten Montage (und ggf. Demontage) von der Außenseite her wird in keiner Weise in einen schon bestehenden Innenausbau eingegriffen, so daß dieser frei von Restriktionen im Bereich der Fugestöße bleibt. Man wird allenfalls geringfügige Freiräume vorsehen, die das hindermisfreie Nach-Innen-Herausstoßen der Verbindungs-10 und Formschlußelemente 14 bei einer allfälligen Demontage ermöglichen.

In der besagten Rinne 23 sind die vorstehenden Schließringe 1OR der Verbindungselemente 10 zwischen den Bauteilen 1 gegenüber der globalen Außenhautkontur abgesenkt aufgenommen. Sie werden abschließend mit einem Abdeckprofil, vorzugsweise mit U-Querschnitt, überdeckt das die Rinne 23 außenhautbündig verschließt. Das Abdeckprofil selbst kann, wie schon erwähnt, einen weiteren Beitrag zum Stabilisieren der Trennfuge 4 zwischen den Bauteilen 1 gegen Längsschub leisten, wenn es paßgenau in die Rinne 23 eingepaßt wird und seine Schenkel mit den anstoßenden Abkant-Partien des Außenhautblechs verklebt werden. Im Übergangsbereich vom Dach zur Seitenwand kann es bei Bedarf ferner mit einer Regenrinne kombiniert werden.

Soll nun eine wie vorstehend aufgebaute Karosserie demontiert werden oder auch ein einzelnes Bauteil z. B. zu Reparaturzwecken aus dem Verbund gelöst werden, so müssen nach dem Entfernen der Abdeckleiste zunächst die Schließringe 10R zerstört werden. Hierfür gibt es geeignete Maschinenwerkzeuge, mit denen auch eine Vielzahl von Schließringen 10R in kurzer Zeit zuverlässig aufgetrennt werden kann.

Danach kann man den Schließringbolzen 10 in Richtung des Stauchkopfes 10K nach innen aus der Durchführung 9 heraustreiben. Die axiale Verspannung der Spannstücke 11 wird schon beim Öffnen des Schließrings 10R gelöst. Ferner können auch die Formschlußelemente 14 aus ihren jeweiligen Durchführungen 13 nach innen herausgetrieben werden. Ist dies an sämtlichen Fügestellen eines modularen Bauteils 1 ausgeführt, so kann dieses mit geeigneten Mitteln senkrecht zu seiner Flächenausdehnung herausgezogen werden. Selbstverständlich sind vorher geeignete Stützmaßnahmen innerhalb der Karosserie zu treffen.

Es ist so auch möglich, in kurzer Zeit ein neues Bauteil 1 mit entsprechenden Abmessungen an die Stelle eines etwa reparaturbedürftigen alten Bauteils 1 einzubauen. Auf diese Weise kann ein Fahrzeug, das z. B. nach einer Flankenfahrt nur geringfügige Blechschäden erlitten hat, schneller wieder in den Verkehr gebracht werden als mit den herkömmlichen Reparaturmethoden.

Während die bisher beschriebene Verbindungsbauform hauptsächlich für horizontale Fügestöße längs einer Seitenwand oder eines Daches vorgesehen ist, kann dasselbe Prinzip auch für senkrechte Fügestoße z. B. im Übergang zwischen einer Seitenwand und einer Stirnwand angewendet werden. Als Anschlußstücke kommen dann zwar keine Spantfüße 5 in Frage, jedoch bleibt der Grundgedanke erhalten, daß am Rand eines jeden Bauteils 1 entlang der Trennfuge 4 eine Reihe von Halbschalen zum Einlegen von axial spannbaren Verbindungselementen 10 und der diese umgebende Stegbereich 12 mit den Schräg- oder Keilflachen anzuordnen ist.

## Patentansprüche

1. Verbindung zwischen zwei modularen Bauteilen für Wagenaufbauten, wobei die modularen Bauteile Hohlprofile aufweisen, die längs einer Trennfuge aneinander gelegt sind und entlang der Trennfuge mit mehreren, jeweils einen gegenseitigen Abstand voneinander aufweisenden Verbindungselementen und Spannstücken befestigt werden, indem die Spannstücke an Keilflächen der Hohlprofile angreifen und dort von den Verbindungselementen gehalten werden, die sich quer über die Breite der Hohlprofile erstrecken, umfassend
- zwei entlang der Trennfuge (4) aneinander gesetzte Randprofile (3),
- mindestens eine die aneinandergesetzten Randprofile (3) in der Ebene der Trennfuge (4) durchdringende von an den Enden von Spantprofilen (2) angeordneten Spantfüßen (5) gemeinsam gebildete Durchführung (9),
- ein in die Durchführung (9) mit geringem radialen Spiel einsetzbares Verbindungselement (10),
- von jeweils einer Erhebung in den Spantfüßen (5) an den beiden Außenrändem der Durchführung (9) radial nach außen abwärts verlaufende Keilflächen (12),
- zwei mit den Keilflächen (12) korrespondierende, sich über die Trennfuge (4) hinweg erstreckende und das Verbindungselement (10) umschließende Spannstücke (11), die durch axiales Verspannen des Verbindungselements (10) über die Keilflächen (12) eine Verspannung der beiden modularen Bauteile (1) zu der Trennfuge (4) hin bewirken,
- in der Trennfuge (4) in den Spantfüßen (5) angeordnete, nach Lösen des Verbindungselements (10) entfernbare Formschlusselemente (14) zur Aufnahme von längs der Trennfuge (4) gerichteten Kräften und/oder Momenten, insbesondere von Schubkräften.

2. Verbindung nach Anspruch 1,
in der die Keilflächen (12) die Ränder der Durchführung (9) kegelmantelförmig umschließen.

3. Verbindung nach einem der vorstehenden Ansprüche 1 bis 2,
in der in der Trennfuge (4) zusätzliche Formschlusselemente (14) mit einem Winkel von ca. 10° angeordnet sind.

4. Verbindung nach Anspruch 3,
aus der die lose in der Trennfuge (4) liegenden Formschlusselemente (14) nach dem Lösen des jeweiligen Verbindungselements (10) zerstörungsfrei entfernbar sind.

5. Verbindung nach einem der vorstehenden Ansprüche 1 bis 4,
in der die Trennfuge (4) gegenüber einer Hauptfläche der verbundenen Bauteile (1) in Form einer Rinne (23) eingesenkt ist.

6. Verbindung nach Anspruch 5,
mit einem die Verbindungselemente (10) und die jeweils zur Außenhaut hin eingesetzten Spannstücke (11) verdeckenden Abdeckprofil.

7. Verbindung nach einem der vorstehenden Ansprüche 1 bis 6,
in der die Verbindungselemente (10) als kaltverformbare, schnellmontagefähige Schließringbolzen ausgeführt sind.

8. Verbindung nach Anspruch 7, deren Spantprofile (2) zumindest in ihrem zum Befestigen der Spantfüße (5) vorgesehenen Endbereich einen geschlossenen, insbesondere Vierkant-Rohrquerschnitt haben, in welchen ein Stutzen (6) des jeweiligen Spantfuß (5) passgenau eingesetzt ist.

9. Verbindung nach Anspruch 7 oder 8, wobei die Außenhaut mittels Stanznieten auf den Spantprofilen (2), den Randprofilen (3) und ggf. den Pfetten befestigt ist.

10. Verbindung nach einem der Ansprüche 7 bis 9, bei der die Außenhaut im Bereich der Randprofile (3) einwärts abgekantet ist, sodass sie beim Zusammensetzen zweier zu verbindender Bauteile (1) eine gegenüber deren Hauptfläche eingesenkte Rinne (23) bildet, in der außenhautseitige Köpfe der Verbindungselemente (10) versenkt und mittels einer Abdeckleiste flächenbündig abgedeckt sind.

## Claims

1. Connection between two modular structural parts for carriage constructions, it being the case that the modular structural parts have hollow profiles which are positioned against one another along a parting joint and are fastened along the parting joint by a plurality of respectively spaced-apart connecting elements and clamping pieces, in that the clamping pieces act on wedge surfaces of the hollow profiles and are retained there by the connecting elements, which extend transversely over the width of the hollow profiles, comprising
- two border profiles (3), which are positioned against one another along the parting joint (4),
- at least one lead-through (9), which passes through the abutting border profiles (3) in the plane of the parting joint (4) and is formed jointly by frame feet (5) arranged at the ends of frame profiles (2),
- a connecting element (10), which can be inserted into the lead-through (9) with a small amount of radial play,
- wedge surfaces (12), which run downwards in the radially outward direction from in each case one elevation in the frame feet (5) on the two outer borders of the lead-through (9),
- two clamping pieces (11), which correspond with the wedge surfaces (12), extend beyond the parting joint (4), enclose the connecting element (10) and, by virtue of axial bracing of the connecting element (10) via the wedge surfaces (12), brace the two modular structural parts (1) in the direction of the parting joint (4), and
- positively locking elements (14), which are arranged in the frame feet (5), in the parting joint (4), can be removed once the connecting element (10) has been released and are intended for absorbing forces and/or moments, in particular shear forces, directed along the parting joint (4).

2. Connection according to Claim 1, in which the wedge surfaces (12) enclose the borders of the lead-through (9) in the form of the lateral surface of a cone.

3. Connection according to one of the preceding claims, Claims 1 to 2, in which additional positively locking elements (14) are arranged at an angle of approximately 10° in the parting joint (4).

4. Connection according to Claim 3, from which the positively locking elements (14) located loosely in the parting joint (4) can be removed, without any destruction, once the respective connecting element (10) has been released.

5. Connection according to one of the preceding claims, Claims 1 to 4, in which the parting joint (4) is sunken in the form of a channel (23) in relation to a main surface of the connected structural parts (1).

6. Connection according to Claim 5, having a covering profile which conceals the connecting elements (10) and the clamping pieces (11) inserted in the direction of the shell in each case.

7. Connection according to one of the preceding claims, Claims 1 to 6, in which the connecting elements (10) are designed as cold-workable, quick-fit locking-ring bolts.

8. Connection according to Claim 7, of which the frame profiles (2), at least in their end region provided for the purpose of fastening the frame feet (5), have a closed cross section, in particular in the form of a rectangular tube, into which a stub (6) of the respective frame feet (5) is fitted.

9. Connection according to Claim 7 or 8, it being the case that the shell is fastened on the frame profiles (2), the border profiles (3) and, if appropriate, the stringers by means of punch rivets.

10. Connection according to one of Claims 7 to 9, in the case of which the shell is bent away inwards in the region of the border profiles (3), with the result that, upon the assembly of two structural parts (1) which are to be connected, it forms a channel (23) which is sunken in relation to the main surface of said structural parts and in which shell-side heads of the connecting elements (10) are positioned in a sunken manner and are covered in a surface-flush manner by means of a covering strip.

## Revendications

1. Raccord entre deux parties constituantes modulaires pour carrosserie de véhicule, les parties constituantes modulaires présentant des profils creux qui sont posés l'un contre l'autre le long d'une fente de séparation et sont fixés le long de la fente de séparation avec plusieurs éléments de raccordement et des tendeurs présentant chaque fois une distance mutuelle l'un de l'autre, les tendeurs agissant sur des surfaces de coin des profils creux et y étant maintenus par les éléments de raccordement qui s'étendent transversalement sur la largeur des profils creux, comprenant :
- deux profils de bord (3) placés l'un contre l'autre le long de la fente de séparation (4) ;
- au moins une traversée (9) formée en commun par des pieds de membrures (5) disposés sur les extrémités de profils de membrures (2) traversant les profils de bord (3) placés l'un contre l'autre au niveau de la fente de séparation (4) ;
- un élément de raccordement (10) insérable dans la traversée (9) avec un jeu radial réduit ;
- des surfaces de coin (12) s'étendant chacune d'une saillie dans les pieds de membrures (5) sur les deux bords extérieurs de la traversée (9) de manière radiale vers l'extérieur et vers le bas ;
- deux tendeurs (11) correspondant aux surfaces de coin (12), qui s'étendent par-dessus la fente de séparation (4) et qui entourment l'élément de raccordement (10), qui induisent une déformation des deux parties constituantes modulaires (1) vers la fente de séparation (4) par une action de déformation axiale de l'élément de raccordement (10) sur les surfaces de coin (12) ;
- des éléments s'ajustant par épousement de forme (14) disposés dans la fente de séparation (4) dans les pieds de membrures (5) démontables après avoir détaché l'élément de raccordement (10) pour la réception de forces et/ou de moments dirigés le long de la fente de séparation (4) en particulier de forces de poussée.

2. Raccord suivant la revendication 1, dans lequel les surfaces de coin (12) entourent sous forme d'aire latérale de cône les bords de la traversée (9).

3. Raccord suivant l'une des revendications précédentes 1 à 2, dans lequel des éléments supplémentaires (14) s'ajustant par épousement de forme sont disposés dans la fente de séparation (4) selon un angle d'environ 10°.

4. Raccord suivant la revendication 3, duquel les éléments s'ajustant par épousement de forme (14) se trouvant détachés dans la fente de séparation (4) sont démontables de manière non destructive après avoir détaché chaque élément de raccordement (10).

5. Raccord suivant l'une des revendications précédentes 1 à 4, dans lequel la fente de séparation (4) est gravée en forme de sillon (23) en face d'une surface principale des parties constituantes raccordées (1).

6. Raccord suivant la revendication 5, avec un profil de recouvrement recouvrant les éléments de raccordement (10) et chacun des tendeurs (11) placés vers l'habillage.

7. Raccord suivante l'une des revendications précédentes 1 à 6, dans lequel les éléments de raccordement (10) sont réalisés sous forme de goupilles de blocage déformables à froid et montables rapidement.

8. Raccord suivant la revendication 7, dont les profils de membrures (2) ont au moins dans leur zone d'extrémité prévue pour la fixation des pieds de membrures (5) une section transversale fermée, en particulier carrée/tubulaire, dans laquelle un embout (6) de chaque pied de membrure (5) est placé avec un ajustement précis.

9. Raccord suivant la revendication 7 ou 8, dans lequel l'habillage est fixé sur les profils de membrures (2), les profils de bord (3) et, le cas échéant, sur les pannes au moyen de rivets de perforation.

10. Raccord suivant l'une quelconque des revendications 7 à 9, dans lequel l'habillage est replié vers l'intérieur dans la zone des profils de bord (3) de sorte que, lors de l'assemblage de deux parties constituantes à raccorder (1), il se forme un sillon gravé (23) en face de la surface principale de celles-ci, dans lequel des têtes des éléments de raccordement (10) du côté de l'habillage sont enfoncées et recouvertes à fleur de la surface au moyen d'un couvre-joint.
